# EUROPÄISCHE PATENTSCHRIFT

(11) **EP 0 908 707 B1**
(45) Veröffentlichungstag und Bekanntmachung des Hinweises auf die Patenterteilung: **11.04.2001**
(21) Anmeldenummer: 98118913.7
(22) Anmeldetag: 07.10.1998
(51) Int. Cl.: G01G 13/02

(54) **Betreiben einer Schüttgutverladeeinrichtung**
Operating a bulk material load plant
Mise en oeuvre d'une installation de chargement de matière en vrac

(30) Priorität: 13.10.1997 DE 19744979
(43) Veröffentlichungstag der Anmeldung: 14.04.1999
(73) Patentinhaber: Karl Schmidt Spedition GmbH & Co., 74076 Heilbronn (DE)
(72) Erfinder: Heyd, Marco, 74078 Heilbronn (DE)
(74) Vertreter: Patentanwalts-Partnerschaft Rotermund + Pfusch

(56) Entgegenhaltungen:
- EP-A- 0 677 723
- EP-A- 0 794 476
- DE-A- 3 617 377
- IT-A- UD 920 150
- "DOSIERTECHNIK AUF DER ANUGA FOODTEC" WAGEN UND DOSIEREN, Bd. 28, Nr. 1, Februar 1997, Seite 27/28 XP000687030
- PATENT ABSTRACTS OF JAPAN vol. 007, no. 216 (P-225), 24. September 1983 & JP 58 108411 A (EE ANDO DEI:KK), 28. Juni 1983
- HELMUT FELGITSCH: "VERLADEN VON LOSEM SCHÜTTGUT ERFORDERT SCHNELLE WAAGEN", MASCHINENMARKT, WÜRZBURG (DE), 1975, Band 81, Nr. 42, Seiten 744 - 746

## Beschreibung

Die Erfindung betrifft ein Verfahren zum Betreiben einer Schüttgutverladeeinrichtung.

Üblicherweise ist dazu am Ende ein Feinstrom notwendig; siehe den Aufsatz von Helmut Felgitsch 'Verladen von losem Schüttgut erfordert schnelle Waagen' in der Zeitschrift 'Maschinenmarkt' Würzburg (DE) 81,1975,42 Seiten 744-746.

Die Erfindung beschäftigt sich mit dem Problem, wie auf einfache, schnelle und sichere Weise Schüttgut aus einem Silo gewichtsmäßig exakt vermessen in ein Transportfahrzeug eingefüllt werden kann. Dabei soll die zu ladende Schüttgutmenge gewichtsmäßig als Sollwert vorgebbar sein, der durch die Wiegeeinrichtung im wesentlichen vollautomatisch erreicht wird. Darüber hinaus soll eine sichere Bedienung möglich sein, die insbesondere ausschließt, daß ein Transportfahrzeug mit Schüttgut aus einem dem Fahrzeug nicht zugeteilten Behältersilo beladen werden kann. Die Wiegeeinrichtung soll ferner in eine von einem Prozeßrechner gesteuerte und überwachte Verladelogistik einfach eingebunden werden können.

Gelöst wird der vorgenannte Problemkreis durch den Patentanspruch 1.

Die erfindungsgemäße Lösung beruht auf dem Gedanken, das zu verladende Schüttgut jeweils schubweise in einem geschlossenen Wiegebehälter zu messen, die jeweils gewichtsmäßig bestimmte Menge aus dem Wiegebehälter abfließen zu lassen und danach den nächsten Schub in einem zu diesem Zweck ausflußgesicherten Wiegebehälter zu wiegen. Das schubweise Wiegen und Verladen des Schüttgutes wird so oft wiederholt bis ein vorgegebenes Gesamtgewicht für das zu verladende Schüttgut erreicht ist. Wie dieses schubweise Vermessen und Verladen im einzelnen durchgeführt wird und wie die Wiegeeinrichtung hierfür ausgestattet ist, wird anhand eines nachfolgend noch zu beschreibenden Ausführungsbeispieles näher erläutert werden.

Zweckmäßige Ausgestaltungen sind Gegenstand der Unteransprüche und werden ebenfalls im Zusammenhang mit einem Ausführungsbeispiel noch näher beschrieben werden.

Ein Ausführungsbeispiel ist in der Zeichnung dargestellt.

In dieser zeigen
- Fig. 1: eine schematische Darstellung einer Schüttgut-Verladeanlage mit einer mobilen Wiegeeinrichtung,
- Fig. 2: einen Schaltplan für eine Schüttgut-Verladeeinrichtung.

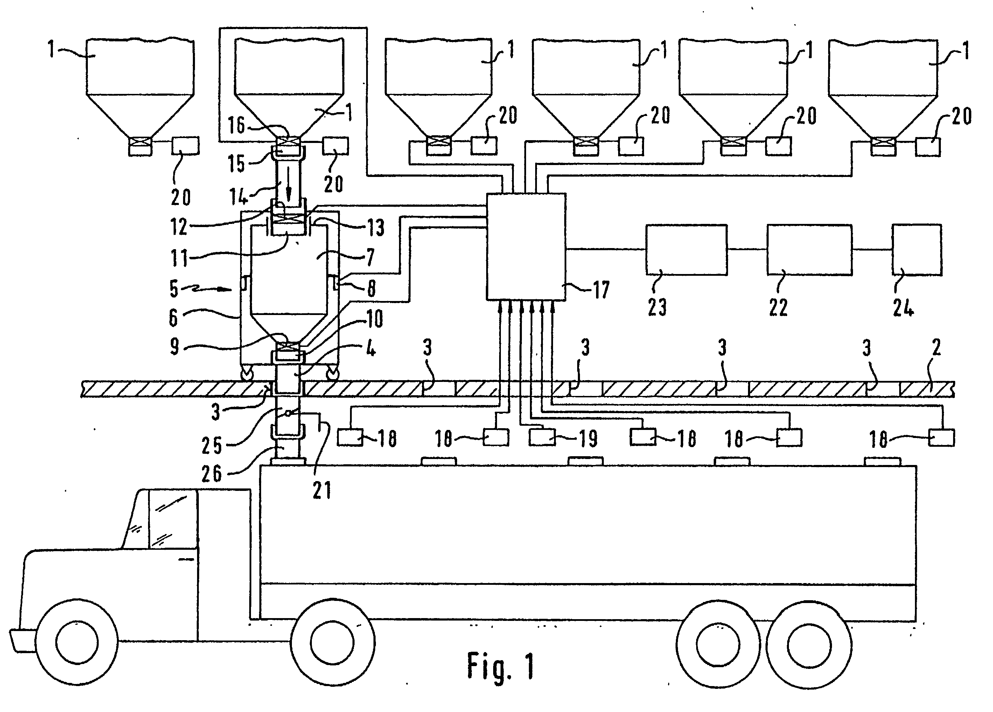

Die Fig. 1 zeigt lediglich einen Ausschnitt aus einer insgesamt aus einer erheblich größeren Anzahl an Schüttgut-Silo-Behältern bestehenden Schüttgut-Verladeeinrichtung.

Eine solche Verladeeinrichtung erstreckt sich im Prinzip über drei Ebenen. In der oberen Ebene sind die Silo-Behälter 1 vorgesehen. In der untersten Ebene ist ein Fahrbereich für Transportfahrzeuge zum Befüllen mit Schüttgut gegeben. Zwischen diesen beiden Ebenen befindet sich eine Verladebühne 2 mit abdeckbaren Öffnungen 3, aus denen das Schüttgut über teilweise elastische Verbindungsrohre 4, 25, 26 in eine zugeordnete Aufnahmeöffnung eines Transportfahrzeuges eingeführt wird.

Zwischen den Öffnungen 3 der Verladebühne 2 und den Auslaßöffnungen der Silo-Behälter 1 liegt der Einsatzbereich für eine erfindungsgemäße Wiegeeinrichtung 5.

Eine solche Wiegeeinrichtung 5 ist wie folgt aufgebaut. In einem auf der Verladebühne 2 verfahrbaren Traggestell 6 ist ein Wiegebehälter 7 lotrecht beweglich gelagert. In dem Lagerbereich befindet sich eine an sich bekannte Gewichtsmeßeinrichtung 8, mit der das Gewicht des Wiegebehälters 7 bestimmt werden kann. Die Gewichtsmeßeinrichtung 8 ist in an sich bekannter Weise derart ausgebildet, daß in jeweils kurzen Zeitabschnitten laufend hintereinander Gewichtsmessungen durchgeführt werden können. Die Zeitabschnitte können beispielsweise lediglich 0,25 s betragen.

Der Wiegebehälter 7 ist an seinem unteren Auslaufende mit einem Auslaufventil 9 versehen. Dieses Auslaufventil 9 ist fest mit dem Wiegebehälter 7 verbunden. Der Auslaufstutzen 10 des Wiegebehälters 7 ragt in ein aufgesetztes elastisches Verbindungsrohr 4, das in eine Öffnung 3 in der Verladebühne 2 einsetzbar ist.

An dem lotrecht oberen Ende des Wiegebehälters 7 befindet sich ein Zulaufstutzen 11 mit einem Zulaufventil 12. Dieser Zulaufstutzen 11 ist zusammen mit dem Zulaufventil 12 fest an dem Traggestell 6 befestigt, so daß zwischen dem Stutzen 11 und einer Abdeckung 13 des Wiegebehälters 7 Relativbewegungen möglich sind. Der Stutzen 11 ist über ein weiteres Verbindungsrohr 14 aus biegsamem Material mit dem Auslaufstutzen 15 eines Silo-Behälters 1 verbunden. In dem Auslaufstutzen 15 eines jeden Silo-Behälters 1 ist ein Ausläufventil 16 vorhanden.

Die Zu- und Ablaufventile 12 und 9 der Wiegeeinrichtung, das Auslaufventil 16 der Silo-Behälter 1 und die Gewichtsmeßeinrichtung 8 sind jeweils durch elektrische Leitungen über eine von insgesamt mehreren Schaltstationen 17 mit einem Prozeßrechner 23 verbunden. Dieser Prozeßrechner 23 erlaubt speicherprogrammierbare Steuerungen. An einen Prozeßrechner angeschlossen ist ferner eine elektronische Daten-Eingabestation 22, die wiederum mit einem Magnetkartenschreiber 24 verbunden ist.

Mit der Schaltstation 17 sind zusätzlich noch verbunden ein Start-Schalter 18, der in dem Fahrbereich von beispielsweise dem Fahrer eines Transportfahrzeuges bedienbar ist. Von dem gleichen Bereich aus führt ein Magnetkartenleser 19 in die Schaltstation 17. Ferner kann in die Schaltstation 17 ein schloßgesicherter Sperrschalter integriert werden, über den bestimmte Steuersignale der Schaltstation 17 gesperrt bzw. freigegeben werden können.

Eine Schaltstation 17 ist jeweils mehreren Silo-Behältern 1 zugeordnet und jeweils über Steuerleitungen mit deren Auslaufventilen 16 verbunden. Bei dem Ausführungsbeispiel nach Fig. 1 sind einer Schaltstation 17 fünf Silo-Behälter 1 zugeordnet. In gleicher Anzahl führen Start-Schalter 18 in die Schaltstation 17, wobei jeder Start-Schalter einer Öffnung 3 zum Durchlassen von Schüttgut in der Verladebühne 2 zugeordnet ist. Den fünf Silo-Behältern ist insgesamt ein Magnetkartenleser 19 zugeordnet, der mit der Schaltstation 17 in der weiter oben beschriebenen Weise verbunden ist.

Die Schaltstation 17 ist vorzugsweise ortsfest auf der Verladebühne 2 montiert. Die Wiegeeinrichtung 5 kann mit ihren Steuer- und Meß-Leitungen über eine einfache Steckverbindung an die Schaltstation 17 angeschlossen oder von dieser getrennt werden.

Bei einer Verladeeinrichtung mit einer Vielzahl von Silo-Behältern 1 kann zweckmäßigerweise jeweils fünf in Reihe liegenden Silo-Behältern 1 eine Schaltstation 17 zugeordnet sein. Die Anzahl fünf resultiert daraus, daß ein Transportfahrzeug üblicherweise eine Länge besitzt, die sich insgesamt auf etwa einen Abschnitt mit fünf hintereinanderliegenden Öffnungen 3 der Verladebühne 2 erstreckt.

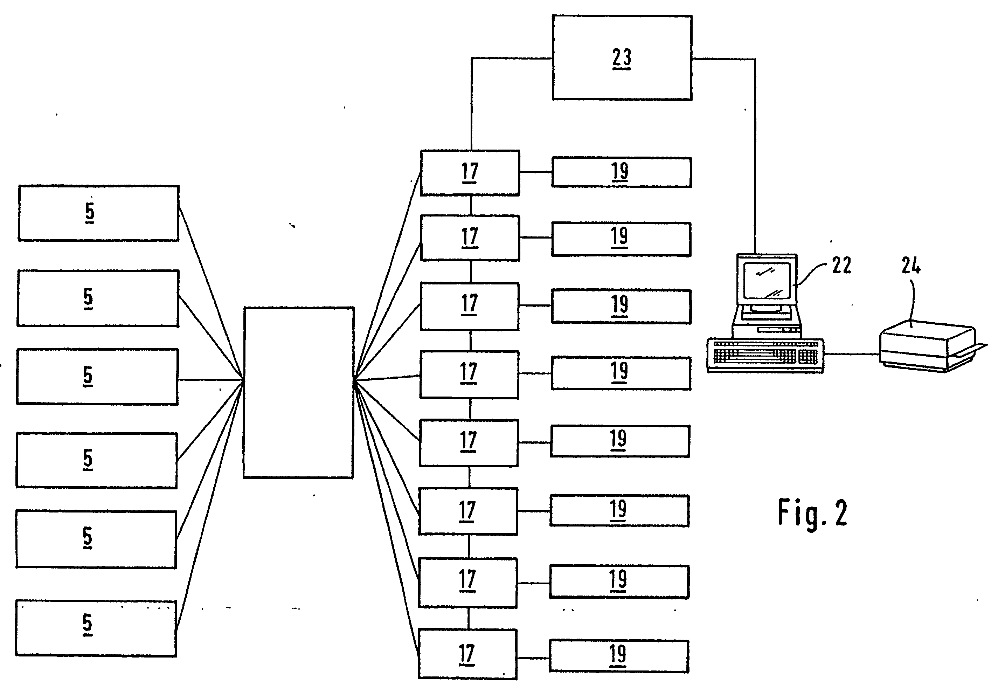

In der Fig. 2 ist in einem Schaltschema dargelegt, wie verschiedene gleichartige Wiegeeinrichtungen 5 unterschiedlichen Schaltstationen 17 zugeordnet werden können. Sämtliche Schaltstationen 17 sind wiederum gemeinsam an einen Prozeßrechner 23 angeschlossen, mit dem die Eingabestation 22 datenführend verbunden ist. Jede der Schaltstationen 17 ist mit einem eigenen Magnetkartenleser 19 verbunden. Des gleichen können auch alle Schaltstationen 17 einen integrierten schloßgesicherten Sperrschalter 20 mit der weiter oben beschriebenen Funktion besitzen.

Zur Sicherung gegen ein ungewolltes Öffnen sind die Auslaufventile 16 der Silo-Behälter 1 jeweils mit einem schloßgesicherten Sperrschalter 20 zu versehen. Diese Sperrschalter 20 sind ausschließlich unabhängig von der Prozeßsteuerung von
Hand zu bedienen. Ein Öffnen eines Auslaufventiles 16 ist über die Prozeßsteuerung nur nach einer vorausgegangenen Betätigung des zugehörigen Sperrschalters 20 möglich. Dieser Sperrschalter 20 muß stets nach einem Verschließen des Auslaufventiles 16 erneut betätigt werden, da die Sperre nach jedem Schließen des Auslaufventiles 16 automatisch eintritt. Für das Betätigen der Sperrschalter 20 können mechanische oder elektronische Schlüssel erforderlich sein, die individuell für die Auslaufventile 16 der einzelnen Silo-Behälter 1 verschieden sein können, das heißt jedem Silo-Behälter 1 kann ein spezieller, unterschiedlicher Schlüssel zugeordnet sein, der ausschließlich nur für den dortigen Sperrschalter 20 paßt.

Eine Verladestation mit einer vorstehend beschriebenen erfindungsgemäßen Wiegeeinrichtung funktioniert wie folgt.

Ein an der Verladestation ankommender Transportwagenfahrer meldet sich bei einem Disponenten an der Eingabestation 22. Der Disponent gibt in die Eingabestation 22 den Transportauftrag datenmäßig ein, wobei er insbesondere die Verlademenge, den Silo-Behälter 1 mit dem zu verladenden Schüttgut und die Zeit, die für ein Verladen vorgesehen ist, eingibt. Die Verlademenge, die Silo-Behälter- und die Zeitangabe werden von dem Eingabegerät 22 an den Prozeßrechner 23 geleitet. Aus dem Magnetschreiber 24 erhält der TransportwagenFahrer eine Magnetkarte, auf der die ihm zugeteilte Verladezeit und die Nummer des Silo-Behälters 1, von dem er Schüttgut erhalten soll, codiert angegeben sind.

Hat der Fahrer sein Transportfahrzeug in der Verladestation unterhalb des ihm angewiesenen Silo-Behälters 1 abgestellt, kann er innerhalb der ihm zugewiesenen Verladezeit das Schüttgut aufnehmen.

Durch Einlegen seiner Magnetkarte in den Magnetkartenleser 19 ist in der Schaltstation 17 erkennbar, aus welchem Silo-Behälter 1 Schüttgut in das Transportfahrzeug eingefüllt werden soll. Die Wiegeeinrichtung 5 wird von einer Bedienungsperson auf der Verladebühne 2 mit dem betreffenden Silo-Behälter 1 verbunden, wozu das biegsame Rohr 14 eine Verbindung zwischen dem Auslaufstutzen 15 des Silo-Behälters 1 und dem Zulaufstutzen 11 des Wiegebehälters 7 bildet. Von dem Auslaufstutzen 10 des Wiegebehälters 7 wird ein biegsames Rohr 4 in eine Öffnung 3 der Verladebühne 2 geführt. Des weiteren werden die Steuer- und Meßleitungen der Wiegeeinrichtung 5 über einen Steckanschluß mit der Schaltstation 17 verbunden.

Über einen Start-Schalter 18 könnte die Schüttgutverladung nunmehr im Prinzip von dem Fahrer eingeleitet werden. Aus Sicherheitsgründen ist dies allerdings erst dann möglich, wenn die Bedienperson auf der Verladebühne 2 den Sperrschalter 20 an dem betreffenden Silo-Behälter 1 betätigt hat. Bei einem unbetätigten Sperrschalter 20 ist kein Öffnen eines Auslaufventiles 16 der Silo-Behälter 1 möglich. Die Schloßcodierung der Sperrschalter 20 ist derart aufgebaut, daß jeweils nur das Auslaufventil 16 eines bestimmten Silo-Behälters für ein Öffnen freigegeben werden kann. Dies bedeutet, daß jedem Silo-Behälter 1 ein bestimmter unterschiedlicher Schlüssel, wenn es sich um mechanische Schlüssel handelt, zugeordnet ist. Handelt es sich um einen elektronischen Schlüssel, ist bei diesem jedem Silo-Behälter 1 ein unterschiedlicher elektronischer Code zugeordnet.

Ist über den Sperrschalter 20 das Auslaufventil 16 eines Silo-Behälters 1 zum Öffnen ansteuerbar geschaltet, kann der Fahrer über einen der Start-Schalter 18 die SchüttgutVerladung und damit den Wiegeprozeß, durch ein Öffnen des betreffenden Silo-Behälter-Auslaufventils 16 einleiten.

Ist der Verladeprozeß entsprechend eingeleitet, wird bei einem geschlossenen Auslaufventil 9 des Wiegebehälters 7 und bei geöffnetem Zulaufventil 12 des Wiegebehälters das Auslaufventil 16 des zugehörigen Silo-Behälters 1 geöffnet. Damit kann Schüttgut in den Wiegebehälter 7 7 einströmen. Während des Einströmvorganges wird laufend das Gewicht des sich füllenden Wiegebehälters 7 in Zeitabschnitten von etwa 0,25 s gemessen. Die Füllmenge für einen Füllvorgang des Wiegebehälters 7 ist als Sollwert elektronisch in dem Prozeßrechner 23 vorgegeben. Sobald der Sollwert für eine einzelne Füllung des Wiegebehälters 7 erreicht ist, schließt das Zulaufventil 12 des Wiegebehälters 7 bei geöffnet bleibendem Auslaufventil 16 des Silo-Behälters 1. Nach dem Schließen des Zulaufventiles 12 öffnet das Auslaufventil 9 des Wiegebehälters 7, wodurch das Schüttgut in das Transportfahrzeug einströmen kann. In dem von der Verladebühne 2 zum Transportfahrzeug führenden Verbindungsrohr 25 ist ein von dem Fahrer des Transportfahrzeuges per Hand bedienbares Klappenventil 21 vorgesehen, durch das der Schüttgutausfluß aus dem Verbindungsrohr 25 jederzeit unterbrochen und aktiviert werden kann.

Nach vollständiger Entleerung des Wiegebehälters 7 erfolgt ein erneuter Füllvorgang bei geschlossenem Auslaufventil 9 und geöffnetem Zulaufventil 12. Die Gewichtsmessung erfolgt in der mit der Schaltstation 17 datenübertragend verbundenen Meßeinrichtung 8. Die Füllgewichte der einzelnen Füllvorgänge werden elektronisch aufsummiert bis eine beispielsweise in der Eingabestation 22 dem Prozeßrechner 23 vorgegebene Gesamtfüllmenge gewichtsmäßig erreicht ist. Sobald die vorgegebene Gesamtfüllmenge tatsächlich erreicht ist, schließt das Auslaufventil 16 des betreffenden Silo-Behälters 1.

Da der Zulaufstutzen 11 mit dem Zulaufventil 12 des Wiegebehälters 7 getrennt von dem Wiegebehälter in dem Traggestell 6 der Wiegeeinrichtung 5 gelagert ist, wird das in dem biegsamen Verbindungsrohr 14 befindliche Schüttgut nicht gewichtsmäßig durch die Meßeinrichtung 8 erfaßt. Dennoch wird das Schüttgut in dem Verbindungsrohr 14 nach Abschluß der Gewichtsmessung in den Wiegebehälter 7 noch eingegeben. Ohne Berücksichtigung dieser Nachfüllmenge ergäbe sich ein unkorrekter Gesamt-Gewichtswert. Um dies zu vermeiden, wird die Nachfüllmenge in dem Verbindungsrohr 14 bei der Vorgabe des Soll-Gewichtswertes in dem Prozeßrechner 23 durch eine entsprechende Reduzierung des Gewichts-Vorgabewertes berücksichtigt.

Durch die Trennung des Zulaufstutzens 11 mit dem Zulaufventil 12 von dem Wiegebehälter 7 kann die Gewichtsmessung innerhalb des Wiegebehälters 7 von Strömungseinflüssen innerhalb des Verbindungsrohres 14 unbeeinflußt bleiben.

Ein besonderer Vorteil der erfindungsgemäßen Einrichtung sowie des Verfahrens, mit dem diese betätigt wird, besteht darin, daß das Transportfahrzeug automatisch mit der vorgegebenen Füllmenge beladen wird, wobei eine äußerst hohe Meßgenauigkeit erreicht wird. Dabei kann der Beladevorgang bei dem Transportfahrzeug durch dessen Fahrer durch Betätigen des Klappenventils 21 jederzeit unterbrochen werden, ohne daß hierdurch die Meßgenauigkeit in irgendeiner Form leidet. Denn während des Ausströmens des Schüttgutes in das Transportfahrzeug erfolgt keine Messung, so daß diese durch eine Unterbrechung des Schüttgutstromes auch nicht beeinflußt werden kann. Eine Unterbrechung des Schüttgutstromes aus dem Wiegebehälter 7 durch den Fahrer des Transportfahrzeuges kann notwendig sein, wenn das Fahrzeug zur Verteilung des Schüttgutes innerhalb des Fahrzeuges über mehrere Öffnungen beladen werden muß. Dann ist es nämlich möglich, daß der Laderaum unter einer Öffnung während eines Füllvorganges vollständig ausgefüllt wird, so daß das Fahrzeug zum Einfüllen des Schüttgutes in eine benachbarte Öffnung verfahren werden muß.

## Patentansprüche

1. Verfahren zum Betreiben einer Schüttgutverladeeinrichtung mit einer Wiegeeinrichtung (5) und mehreren, jeweils mit einem Auslaufventil (16) versehenen Silo-Behältern (1), aus denen Schüttgut über das jeweilige Auslaufventil (16) und ein sich hieran jeweils anschließendes, mit dem jeweiligen Silo-Behälter (1) verbundenes Verbindungsrohr (14) in einen Wiegebehälter (7) der Wiegeeinrichtung (5) abfüllbar ist, bei der die Wiegeeinrichtung (5) gravimetrisch arbeitet und einen an einem Traggestell (6) gelagerten Wiegebehälter (7) sowie eine die Schüttgutgewichtserhöhung innerhalb des Wiegebehälters (7) kontinuierlich in kurzen Zeitabschnitten ermittelnde Gewichtsmesseinrichtung (8) erfasst, wobei der Wiegebehälter (7) lotrecht unten ein Ablaufventil (9) besitzt,
bei dem innerhalb der Schüttgutverladeeinrichtung
- die Wiegeeinrichtung (5) für eine Zuordnung zu den mehreren Silo-Behältern (1) beweglich angeordnet ist,
- in der Wiegeeinrichtung (5) im Bereich der Einfüllöffnung des Wiegebehälters (7) ein von den Wiegebehälter (7) unabhängig gelagertes, aus einem der Silo-Behälter (1) durch das Verbindungsrohr (14) ausströmendes Schüttgut aufnehmendes Zulaufventil (12) vorgesehen ist,
- die in kurzen Zeitabschnitten ermittelten Gewichtsmesswerte einem Prozessrechner (23) zugeleitet werden,
- voll- und/oder unvollständige Wiegebehälterfüllungen durch den Prozessrechner (23) bestimmt und gesteuert werden,
- das Sollgewicht der Gesamt-Verlademenge in den Prozessrechner eingebbar ist,
- der Prozessrechner (23) bei einem Erreichen eines von dem eingegebenen Soll-Verladegewicht unter Berücksichtigung eines Korrekturwertes abgeleiteten fiktiven Gewichtswertes ein Schließen des Auslaufventiles (16) des betreffenden Silo-Behälters (1) veranlasst,
- der Prozessrechner (23) den Korrekturwert aus der Differenz des vorgegebenen Soll-Verladegewichtswertes und dem Gewichtswert einer den Förderraum zwischen dem Auslaufventil (16) des betreffenden Silo-Behälters (1) und dem Zulaufventil (12) des Wiegebehälters (7) ausfüllenden Schüttgutmenge ermittelt,
- ein für einen Schüttgutaustrag aus einem der Silo-Behälter (1) geöffnetes Auslaufventil (16) während eines Verladevorganges bis zu einer in dem Prozessrechner (23) erfolgten Feststellung des korrigierten Soll-Verladegewichtswertes durchgehend geöffnet ist.

2. Verfahren nach Anspruch 1,
**dadurch gekennzeichnet,**
dass der Prozessrechner (23) ein Öffnen des Auslaufventiles (16) des Silo-Behälters (1) nur auslösen kann, wenn eine solche Steuerungsmöglichkeit durch einen von außen eingebbaren Code freigegeben ist.

3. Verfahren nach Anspruch 2,
**dadurch gekennzeichnet**,
dass der Code ausschließlich über eine entsprechend kodierte Magnetkarte eingebbar ist.

4. Verfahren nach Anspruch 2 oder 3,
**dadurch gekennzeichnet,**
dass für ein Öffnen des Auslaufventils (16) eines der Silo-Behälter (1) noch ein zusätzlicher Code eingegeben sein muss.

5. Verfahren nach Anspruch 4,
**dadurch gekennzeichnet**,
dass der zusätzliche Code durch einen mechanisch wirkenden Schlüssel eingebbar ist.

6. Verfahren nach einem der vorhergehenden Ansprüche,
**dadurch gekennzeichnet,**
dass der Prozessrechner (23) mit parallel geschalteten Schaltstationen (17) verbunden ist, die mit Steckanschlüssen für die Datenleitungen der Wiegeeinrichtung (5) versehen sind.

## Claims

1. Process for operating a bulk material loading plant with a weighing device (5) and a plurality of silo containers (1), provided in each case with a discharge valve (16), from which silo containers (1) bulk material can be unloaded via the respective discharge valve (16) and a connecting tube (14) attached in each case thereto and connected to the respective silo container (1) into a weighing container (7) of the weighing device (5), in which the weighing device (5) operates gravimetrically and comprises a weighing container (7) mounted on a mounting structure (6) and a weight measuring device (8) which continuously determines, at short time intervals, the increase in bulk material weight inside the weighing container (7), wherein the weighing container (7), has an outlet valve (9) perpendicularly below, in which, inside the bulk material loading plant,
- the weighing device (5) is movably arranged for allocation to the plurality of silo containers (1),
- provided in the weighing device (5) in the region of the filling aperture of the weighing container (7) there is a field valve (12) which is mounted independently of the weighing container (7) and receives bulk material flowing out of one of the silo containers (1) through the connecting tube (14),
- the measured weight values determined at short time intervals are fed to a process control computer (23),
- complete and/or incomplete weighing container fillings are determined and controlled by the process control computer (23),
- the desired weight of the total load quantity is input into the process control computer (23),
- the process control computer (23) brings about a closure of the discharge valve (16) of the respective silo container (1) when a fictitious weight value derived from the input desired load weight allowing for a correction value, is reached,
- the process control computer (23) determines the correction value from the difference between the predetermined desired load weight value and the weight value of a bulk material quantity occupying the conveying space between the discharge valve (16) of the relevant silo container (1) and the field valve (12) of the weighing container (7).
- a discharge valve (16) opened for discharging bulk material from one of the silo containers (1) is continuously open during a loading process until the corrected desired load weight value is detected in the process control computer (23).

2. Process according to claim 1, characterized in that the process control computer (23) can only trigger opening of the discharge valve (16) of the silo container (1) when a control facility of this type is released by a code which can be input from outside.

3. Process according to claim 2, characterized in that the code can be input exclusively via a correspondingly coded magnetic card.

4. Process according to claim 2 or 3, characterized in that an additional code must be input to open the discharge valve (16) of one of the silo containers (1).

5. Process according to claim 4, characterized in that the additional code can be input by a mechanically acting key.

6. Process according to one of the preceding claims, characterized in that the process control computer (23) is connected to switching stations (17) connected in parallel and provided with plug-in connections for the data lines of the weighing device (5).

## Revendications

1. Procédé pour la mise en oeuvre d'une installation de chargement de matière en vrac avec un dispositif de pesée (5) et plusieurs silos (1), respectivement munis d'une soupape de décharge (16), à partir desquels de la matière en vrac peut être chargée dans une trémie de pesage (7) du dispositif de pesée (5) par l'intermédiaire de la soupape de décharge respective (16) et d'un conduit de jonction (14) respectivement consécutif, assemblé avec le silo (1) respectif, installation sur laquelle le dispositif de pesée (5) fonctionne par gravimétrie et comprend une trémie de pesage (7) montée sur un cadre porteur (6), ainsi qu'un dispositif de mesure pondérale (8), déterminant en continu et par brefs intervalles de temps la hausse de poids de la matière en vrac à l'intérieur de la trémie de pesage (7), la trémie de pesage (7) présentant verticalement en partie basse une soupape de décharge (9), procédé selon lequel, à l'intérieur de l'installation de chargement de matière en vrac,
- le dispositif de pesée (5) a une disposition mobile pour une association aux plusieurs silos (1),
- une soupape d'alimentation (12), montée indépendamment de la trémie de pesage (7) et recevant de la matière en vrac s'écoulant de l'un des silos (1) au travers du conduit de jonction (14), est prévue dans le dispositif de pesée (5) dans la zone de l'ouverture de remplissage de la trémie de pesage (7),
- les valeurs de mesure pondérales, déterminées par brefs intervalles de temps, sont transmises à un ordinateur de processus (23),
- des remplissages complets et/ou incomplets de la trémie de pesage sont définis et commandés par l'ordinateur de processus (23),
- le poids de consigne de la quantité de chargement totale peut être introduit dans l'ordinateur de processus,
- l'ordinateur de processus (23), lors d'une obtention d'une valeur pondérale fictive, déduite du poids de chargement de consigne introduit compte tenu d'une valeur corrective, provoque une fermeture de la soupape de décharge (16) du silo (1) concerné,
- l'ordinateur de processus (23) détermine la valeur corrective à partir de la différence de la valeur pondérale de chargement de consigne prédéfinie et de la valeur pondérale d'une quantité de matière en vrac, remplissant l'espace d'alimentation entre la soupape de décharge (16) du silo (1) concerné et la soupape d'alimentation (12) de la trémie de pesage (7),
- une soupape de décharge (16), ouverte pour une évacuation de matière en vrac de l'un des silos (1), est ouverte en continu pendant une opération de chargement jusqu'à un constat, assuré dans l'ordinateur de processus (23), de la valeur pondérale de chargement de consigne corrigée.

2. Procédé suivant la revendication 1, caractérisé en ce que l'ordinateur de processus (23) ne peut déclencher une ouverture de la soupape de décharge (16) du silo (1) que si une telle possibilité de commande est permise par un code pouvant être introduit de l'extérieur.

3. Procédé suivant la revendication 2, caractérisé en ce que le code peut être exclusivement introduit par l'intermédiaire d'une carte magnétique codée en conséquence.

4. Procédé suivant l'une des revendications 2 et 3, caractérisé en ce qu'un code supplémentaire doit être encore introduit pour une ouverture de la soupape de décharge (16) de l'un des silos (1).

5. Procédé suivant la revendication 4, caractérisé en ce que le code supplémentaire peut être introduit par une clé mécanique.

6. Procédé suivant l'une des revendications précédentes, caractérisé en ce que l'ordinateur de processus (23) est relié à des postes de couplage (17) montés en parallèle, munis de fiches de raccordement pour les lignes de données du dispositif de pesée (5).
